# EUROPEAN PATENT APPLICATION

(11) **EP 4 769 793 A1**
(43) Date of publication of application: **01.07.2026**
(21) Application number: 25867184.1
(22) Date of filing: 14.07.2025
(51) Int. Cl.: H01M 50/502, H01M 50/507, H01M 50/516, H01M 50/178, H01M 50/503, H01M 50/242

(54) **BATTERY PACK AND VEHICLE COMPRISING SAME**

(30) Priority: 30.10.2024 KR 20240150941
(71) Applicant: LG ENERGY SOLUTION, LTD., Seoul 07335 (KR)
(72) Inventor: MUN, Ji-Seon, Yuseong-gu, Daejeon 34122 (KR)
(74) Representative: BCKIP Part mbB
(86) International application number: PCT/KR2025/010279
(87) International publication number: WO 2026/095259

(57) **Abstract**

The present disclosure relates to a battery pack capable of preventing tab disconnection due to swelling of a battery cell, and a vehicle including the same, and provides a battery pack including a cell assembly including a plurality of battery cells arranged at least in a row, and a busbar assembly electrically connected to the cell assembly, wherein the busbar assembly may include a busbar frame having a predetermined length and provided along an arrangement direction of the plurality of battery cells, and at least one busbar connected to the electrode leads of the plurality of battery cells and mounted to the busbar frame so as to be movable along a longitudinal direction of the busbar frame, and a vehicle including the same.

## Description

### TECHNICAL FIELD

The present disclosure relates to a battery pack and a vehicle including the same, and more specifically, to a battery pack capable of preventing tab disconnection due to swelling of a battery cell, and a vehicle including the same.

This application is based on and claims priority from Korean Patent Application No. 10-2024-0150941, filed on October 30, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries currently widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, techniques such as increasing the number and size of electrode tabs and leads have been applied to accommodate the high-capacity environment of secondary batteries. However, simply increasing the number and/or size of electrode tabs and leads makes it difficult to ensure a stable and reliable connection between the electrode tabs and leads. In addition, as the number and/or size of electrode tabs and leads increases, the load may cause disconnection of electrode tabs when welding the electrode tabs and leads, especially in pouch-type secondary batteries.

Here, the electrode assembly is formed by alternating laminating positive and negative electrode plates. The positive and negative electrode plates are separated by a separator. Electrode tabs are connected to the electrode plates according to their polarities. Leads are welded to the electrode tab stack where the electrode tabs are gathered.

Conventionally, the electrode tab stack begins very close to the electrode assembly, and thus the welding position of the electrode tab and lead is also very close to the electrode assembly. Accordingly, the portion of the electrode tab protruding from the electrode assembly is highly susceptible to stress because it is tautly stretched while being inclined at a steep angle. This, in turn, may lead to disconnection when a load is applied to this portion during welding. Furthermore, in this structure, swelling of the battery cells increases the overall width of the cell assembly during use, thereby applying high tension to the welded electrode lead. This may lead to disconnection in the electrode tab portion, which is tautly stretched and inclined at a steep angle.

Therefore, it is necessary to develop a battery pack with a structure capable of preventing disconnection in the electrode tab portion even when cell swelling occurs due to use of the battery.

### DISCLOSURE

### Technical Problem

The present disclosure is designed to solve the problems of the related art, and therefore the present disclosure is directed to providing a battery pack having a structure capable of improving the bonding stability between the electrode leads and the electrode tabs, and a vehicle including the same.

The present disclosure is also directed to providing a battery pack having a structure capable of preventing tab disconnection due to swelling of the battery cell, and a vehicle including the same.

The present disclosure is also directed to providing a battery pack having a structure capable of further securing an extra length of the electrode leads, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including a cell assembly including a plurality of battery cells arranged at least in a row, and a busbar assembly electrically connected to the cell assembly, wherein the busbar assembly may include a busbar frame having a predetermined length and provided along an arrangement direction of the plurality of battery cells, and at least one busbar connected to the electrode leads of the plurality of battery cells and mounted to the busbar frame so as to be independently movable along a longitudinal direction of the busbar frame.

For example, the busbar frame may be configured as a pair of guide frames arranged in parallel to be spaced apart from each other by a predetermined distance.

For example, the at least one busbar may be configured to slide between the pair of guide frames along the longitudinal direction of the busbar frame.

For example, the electrode lead may have a width smaller than that of the busbar and may be welded to the busbar so as not to contact the busbar frame.

For example, lengths of electrode leads disposed at the outermost sides, among a plurality of electrode leads connected together to the busbar, may be longer than a length of an electrode lead disposed between them.

For example, the electrode lead may be bent at least once.

For example, at least some of a plurality of electrode leads connected together to the busbar may be configured such that a bent portion of the electrode lead is partially straightened by movement of the busbar due to swelling of the battery cell.

For example, the bent portion of the electrode lead may be located in a space between a cell case of the battery cell and the busbar.

For example, the plurality of electrode leads connected together to the busbar may be bent toward a center of the plurality of electrode leads.

For example, a plurality of busbars may be provided to be spaced apart from each other by a predetermined distance along the longitudinal direction of the busbar frame.

For example, the busbar assembly may include at least one partition provided between adjacent busbars so as to be spaced apart from the respective busbars by predetermined distances.

For example, the busbar frame may include a first longitudinal end and a second longitudinal end provided at both ends of the busbar frame in the longitudinal direction, and a groove formed to be recessed to a predetermined depth from one surface of the busbar frame and extending from the first longitudinal end to the second longitudinal end along the longitudinal direction of the busbar frame.

For example, the partition may have a connecting portion inserted into the groove to be slidable along the longitudinal direction of the busbar frame.

For example, the busbar frame may include at least one fixing portion having a through-hole of a predetermined size.

For example, the partition may be fixed to the busbar frame through the fixing portion.

For example, the busbar frame may include at least one recess formed to be recessed to a predetermined depth from one surface of the busbar frame.

For example, the partition may be configured to be inserted into the recess and fixed in position.

For example, the busbar frame may include a first longitudinal end and a second longitudinal end provided at both ends of the busbar frame in the longitudinal direction, and a groove formed to be recessed to a predetermined depth from one surface of the busbar frame and extending from the first longitudinal end to the second longitudinal end along the longitudinal direction of the busbar frame.

For example, the busbar may include a connecting portion inserted into the groove to be slidable along the longitudinal direction of the busbar frame.

For example, the busbar assembly may be configured such that at least one of the connecting portion of the busbar and the groove of the busbar frame is formed as a curved surface.

For example, the busbar assembly may include a finishing portion configured to be in surface contact with at least one of the first longitudinal end and the second longitudinal end.

For example, the finishing portion may include at least one protrusion protruding from one surface of the finishing portion, and an elastic portion connected to an end of the protrusion and made of an elastic material having a cross-sectional area larger than that of the protrusion.

For example, the protrusion and the elastic portion may be fitted into an insertion portion formed on one of the first longitudinal end and the second longitudinal end.

For example, the busbar may be disposed along the longitudinal direction of the busbar frame and may have a concave shape on at least a portion of a side surface of the busbar that is not connected to the busbar frame.

For example, the electrode lead may be bent along the concave shape.

For example, the cell assembly may include at least one buffer portion provided between the plurality of battery cells.

For example, the battery pack may include a pack case that accommodates the plurality of battery cells, and the pack case may include a base plate that supports the cell assembly and a pair of side plates that respectively support both sides of the cell assembly.

For example, the busbar frame may be disposed on the pair of side plates and secured by at least one bracket.

For example, the battery pack may further include a frame support plate that is disposed between the pair of busbar frames and configured to support the busbar assembly from the side.

For example, the battery pack may include a protective pad provided between the cell assembly and the busbar assembly.

In another aspect of the present disclosure, there is provided a vehicle comprising at least one battery pack described above.

### Advantageous Effects

The battery pack and vehicle including the same according to various embodiments of the present disclosure have the effect of preventing disconnection in the welded portion of the electrode tab and electrode lead.

In addition, the battery pack and vehicle including the same according to various embodiments have the effect of reducing the tension applied to the electrode leads of a battery cell even when the battery cell is swollen.

In addition, the battery pack and vehicle including the same according to various embodiments have the effect of effectively securing the margin of the electrode leads.

However, the effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a schematic plan view of a battery pack according to an embodiment of the present disclosure.
FIG. 2 is a drawing illustrating the movement of a busbar in a busbar assembly of the battery pack according to FIG. 1.
FIG. 3 is a schematic cross-sectional view of the battery pack taken along line A-A' in FIG. 1.
FIG. 4 is a schematic cross-sectional view of the battery pack taken along line B-B' in FIG. 1.
FIG. 5 is a drawing illustrating a swelling state of a plurality of battery cells in the battery pack according to FIG. 4.
FIG. 6 is an exploded perspective view schematically illustrating a busbar assembly of the battery pack according to FIG. 1.
FIG. 7 is a drawing illustrating the assembly structure of the busbar assembly according to FIG. 6.
FIG. 8 is a schematic cross-sectional view of the busbar assembly taken along line C-C' in FIG. 7.
FIG. 9 is an exploded perspective view schematically illustrating another embodiment of the busbar assembly according to FIG. 7.
FIG. 10 is a drawing illustrating the assembly structure of the busbar assembly according to FIG. 9.
FIG. 11 is a cross-sectional view schematically illustrating the busbar assembly taken along line E-E' in FIG. 10.
FIG. 12 is a cross-sectional view schematically illustrating the busbar assembly taken along line D-D' in FIG. 7.
FIG. 13 is a cross-sectional view schematically illustrating another embodiment of the busbar assembly according to FIG. 12.
FIG. 14 is a drawing illustrating the assembly structure of a finishing portion of the busbar assembly according to FIG. 6.
FIG. 15 is a cross-sectional view schematically illustrating the finishing portion of the busbar assembly taken along line F-F' in FIG. 14.
FIG. 16 is a cross-sectional view schematically illustrating another example of a battery pack taken along line B-B' in FIG. 1.
FIG. 17 is a drawing schematically illustrating the busbar according to FIG. 16.
FIG. 18 is a schematic drawing of a battery pack according to another embodiment of the present disclosure.
FIG. 19 is a schematic drawing of a bracket secured to a pack case of the battery pack according to FIG. 18.
FIG. 20 is a schematic drawing of a battery pack according to another embodiment of the present disclosure.
FIG. 21 is a schematic drawing of a battery pack according to another embodiment of the present disclosure.
FIG. 22 is a drawing illustrating a protective pad of the battery pack according to FIG. 21.
FIG. 23 is a drawing schematically illustrating a vehicle including the battery packs of the aforementioned embodiments.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

A single element used herein should be construed to encompass a plurality of elements, unless stated otherwise. In this specification, the expression "one component 'is configured as' or 'includes' elements or steps" should not be understood that the component must all of the elements or steps, and should be understood that the component may exclude some of the elements or steps and that the component may further include additional elements or steps.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

The present disclosure may be embodied by each of the following embodiments independently. Furthermore, the present disclosure may also be implemented by combining two or more of the following embodiments. Each of the following embodiments may not only be implemented independently, but may also be freely combined with one another.

As an example, the X-axis direction in the drawings of the present disclosure represents the stacking direction of battery cells, and the Z-axis direction represents the direction perpendicular to the ground.

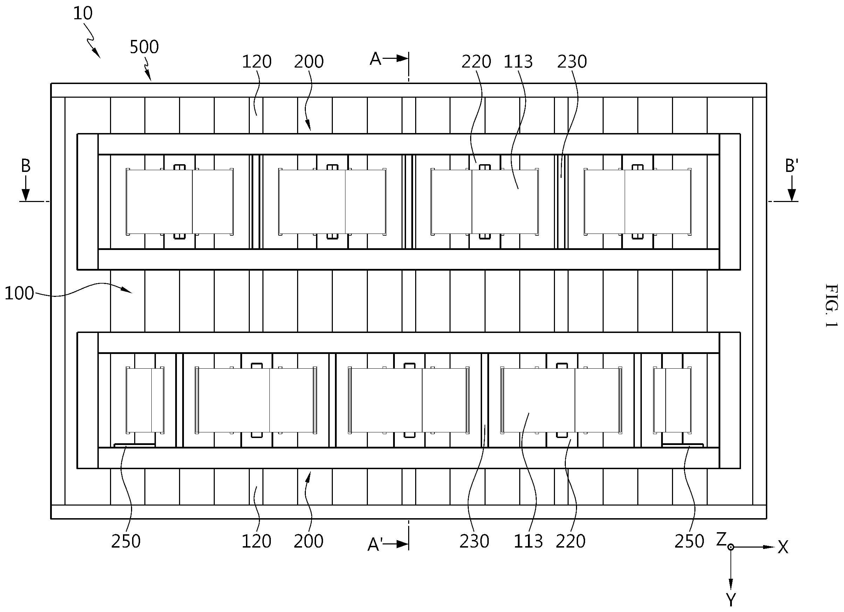

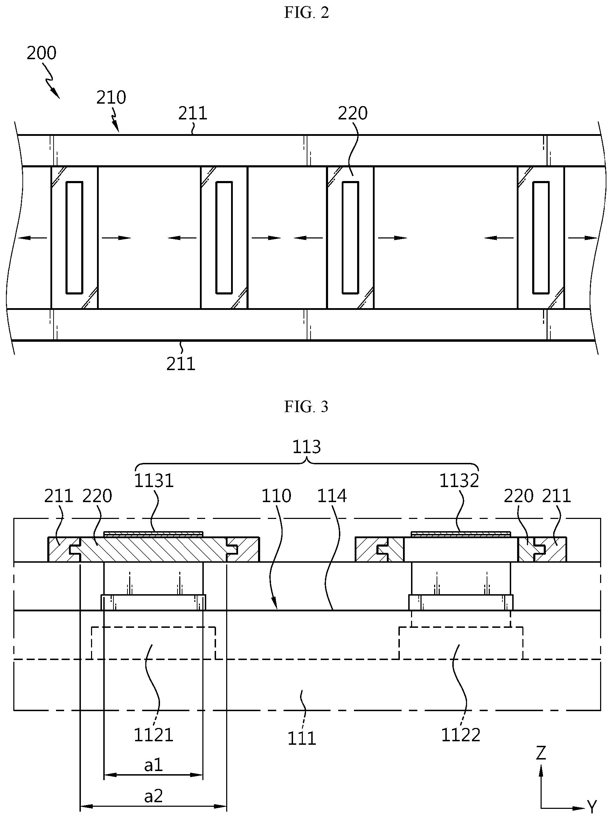

First, the overall structure of a battery pack 10 according to an embodiment of the present disclosure will be described with reference to FIGS. 1 and 2.

FIG. 1 is a schematic plan view of a battery pack 10 according to an embodiment of the present disclosure, and FIG. 2 is a drawing illustrating the movement of a busbar 220 in a busbar assembly 200 of the battery pack 10 according to FIG. 1.

Referring to FIGS. 1 and 2, the battery pack 10 according to an embodiment of the present disclosure includes a cell assembly 100 including a plurality of battery cells 110 arranged at least in a row, and a busbar assembly 200 electrically connected to the cell assembly 100.

The plurality of battery cells 110 of the cell assembly 100 may be classified into cylindrical battery cells, prismatic battery cells, and pouch-type battery cells. Hereinafter, as illustrated in the drawings, the battery cells 110 will be described as being pouch-type battery cells in the present embodiment. A pouch-type battery cell generally refers to a battery cell 110 in which the cell case 114 housing the electrode assembly 111 is a pouch case.

Electrode leads 113 of the plurality of battery cells 110 typically protrude/extend outside the cell case 114. The pouch-type battery cell may include an electrode lead 113 of a first polarity and an electrode lead 113 of a second polarity, and a plurality of pouch-type battery cells may be stacked at least in a row so as to be in contact with each other, thereby forming at least one cell assembly 100.

The busbar assembly 200 may include a busbar frame 210 and at least one busbar 220 mounted to the busbar frame 210 so as to be electrically connected to the cell assembly 100.

The busbar frame 210 is provided to have a predetermined length along the arrangement direction (X direction) of the plurality of battery cells 110. The predetermined length may be configured to conform to the size of the pack case 500 of the battery pack 10, which will be described later.

At least one busbar 220 may be connected to the electrode leads 113 of the plurality of battery cells 110, and in this case, the polarity of the electrode leads connected to the at least one busbar 220 may be the same or different between the respective connected battery cells 110.

One or more busbars 220 may be connected to the busbar frame 210 so as to be independently movable along the longitudinal direction of the busbar frame 210.

The independent movement of the one or more busbars 220 may be associated with the movement of the electrode leads 113 of the battery cells 110 connected to the busbars 220. When cell swelling occurs in a battery cell 110, a significant amount of tension may be applied to the electrode leads 113 connected to the busbar 220 due to the expansion of the battery cell 110. In the present embodiment, the tension applied to the electrode leads 113 between the busbar 220 and the cell case 114 of the battery cell 110 during the cell swelling may be minimized through the movement of the busbar 220.

When cell swelling occurs in the battery pack 10 according to the present embodiment, the one or more busbars 220 connected to the electrode leads 113 of the battery cells 110 may be moved independently on the busbar frame 210, so that the tension applied to the electrode leads 113 of the plurality of battery cells 110 may be sufficiently relieved, compared to a conventional battery pack having busbars fixed to the busbar frame by welding or the like.

Thus, in an embodiment of the present disclosure, the tension applied to the electrode lead 113 may be reduced by the movement of the busbar 220 connected to the electrode lead 113 during cell swelling, thereby maintaining the stability of the electrical connection. As a result, the long-term durability of the battery pack 10 and the reliability of the overall battery system may be enhanced.

The busbar frame 210 according to the present embodiment may be configured as a pair of guide frames 211 arranged in parallel to be spaced apart from each other by a predetermined distance. The guide frame 211 may have a rod shape, and this structure, as will be described later, may allow the busbar 220 to slide smoothly between the pair of guide frames 211 along the longitudinal direction of the busbar frame 210. In particular, the distance between the guide frames 211 may be adjusted to match the size of the busbar 220, ensuring that the busbar 220 may move freely within a certain range of distance while being securely fixed.

That is, the busbar frame 210 may be designed to provide a rail-type movement path configured as a pair of guide frames 211 such that one or more busbars 220 may slide along the rail-type movement path.

For example, pairs of electrode leads 113 provided in a plurality of battery cells 110, i.e., electrode leads 113 of a first polarity or electrode leads 113 of a second polarity, are arranged in a row parallel to the stacking direction of the cell assembly 100. In the present embodiment, the busbar frame 210 may accommodate four busbars 220 that may be connected to the electrode leads 113 in one row, among the pairs of electrode leads 113 arranged in parallel. The four busbars 220 may be mounted to the busbar frame 210 so as to slide independently in both directions along the longitudinal direction of the busbar assembly 200 between the pair of guide frames 211.

Therefore, the battery pack 10 according to the present embodiment may provide a structure that ensures the stable mounting of one or more busbars 220 via the sliding rail-type busbar frame 210.

In addition, since the busbars 220 slide between the pair of guide frames 211, the busbars 220 may be mounted to the busbar frame 210 with a simpler structure. In addition, since the respective busbars 220 are arranged in a straight line relative to the busbar frame 210, the space utilization may be maximized within the battery pack 10.

Next, a detailed connection structure between the cell assembly 100 and the busbar assembly 200 of the battery pack 10 according to an embodiment of the present disclosure will be described.

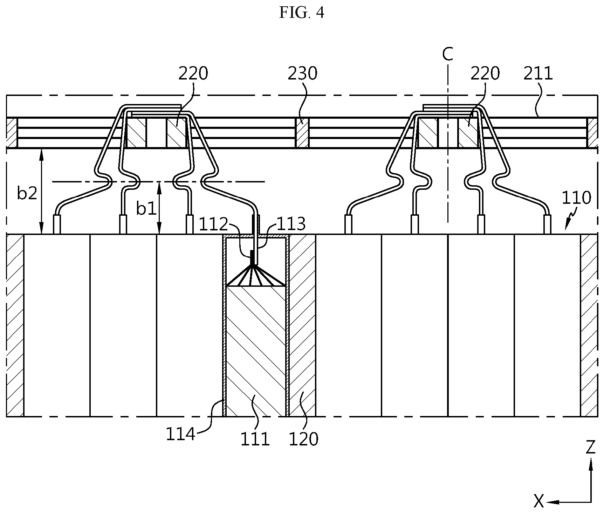

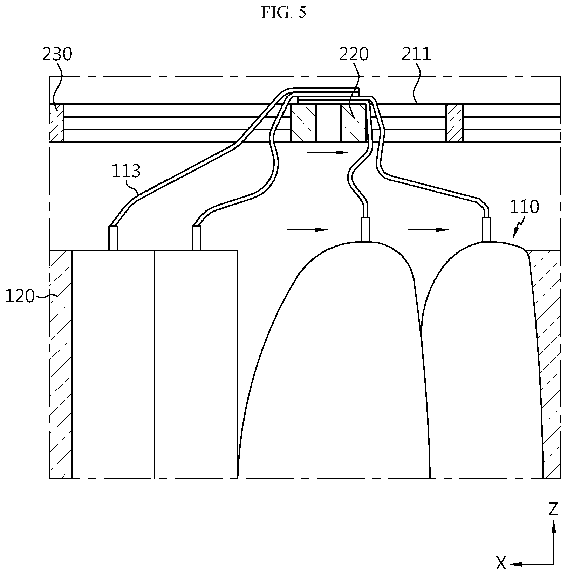

FIG. 3 is a schematic cross-sectional view of the battery pack 10 taken along line A-A' in FIG. 1, FIG. 4 is a schematic cross-sectional view of the battery pack 10 taken along line B-B' in FIG. 1, and FIG. 5 is a drawing illustrating a swelling state of a plurality of battery cells 110 in the battery pack 10 according to FIG. 4.

Referring to FIGS. 3 and 4, a battery cell 110 may include an electrode assembly 111, an electrode tab 112, a pair of electrode leads 113, and a cell case 114.

The electrode assembly 111 is configured such that positive and negative electrode plates alternately stacked with a separator interposed between them. Electrode tabs 112 may be connected to the respective electrode plates depending on their polarities so as to protrude from the electrode assembly 111. The electrode tabs 112 may include a positive electrode tab 1121 and a negative electrode tab 1122.

The plurality of electrode tabs 112 protruding from the electrode assembly 111 may be pulled at an angle, gathered, compressed, and then welded to the electrode lead 113. That is, a weld between the electrode lead 113 and the plurality of electrode tabs 112 is vulnerable to stress and highly susceptible to disconnection when the battery cell swells.

The pair of electrode leads 113 may be connected to the positive electrode tab 1121 and the negative electrode tab 1122, respectively, which are connected to the electrode assembly 111. The electrode lead 113 connected to the positive electrode tab 1121 functions as a positive electrode lead 1131 having a first polarity, and the electrode lead 113 connected to the negative electrode tab 1122 functions as a negative electrode lead 1132 having a second polarity. At least a portion of the electrode lead 113 may protrude outside the cell case 114.

As described above, the cell case 114 may be a pouch-type case. Here, the pouch case may typically be structured as a laminated sheet of inner layer/metal layer/outer layer. Here, the inner layer, which is in direct contact with the electrode assembly 111, may have insulating properties and resistance to the electrolyte. In addition, for sealing from the outside, the sealing portion where the inner layer is thermally bonded may have excellent thermal bonding strength.

The electrode leads 113 protruding from the cell case 114 of each battery cell 110 illustrated in FIG. 3 may be connected to the busbar 220 described above.

The busbar 220 may be made of a metallic material, such as copper, silver, tin, or plated copper, which has electrical conductivity, and may safely conduct current. The electrode leads 113 may be tightly attached and welded to the busbar 220 for electrical connection. In addition, the busbar frame 210, which provides a movement path for the busbars 220, may be made of an insulating material to provide electrical insulating properties.

The pairs of electrode leads 113 provided in the plurality of battery cells 110 are arranged in a row parallel to the stacking direction (X direction) of the plurality of battery cells 110.

In this case, the cell assembly 100 may form groups each including some of the plurality of battery cells 110. The electrode leads 113 arranged in one row in the same group may be attached to the same busbar 220 by welding or the like. In addition, at least some of the electrode leads 113 arranged in the other row in another group, which is different from the above group, may be attached to the same busbar 220 by welding or the like. As a result, the cell assembly 100 may be configured to conduct current through the whole configuration.

Some of the electrode leads 113 connected to the same busbar 220 within the same group may be configured as positive electrode leads 1131, while the remainder may be configured as negative electrode leads 1132.

As an example, the battery pack 10 may include a cell assembly 100 in which a plurality of battery cells 110 are arranged in a row, each having both a positive electrode lead 1131 and a negative electrode lead 1132 disposed on one side of cell case 114. In this case, the positive electrode leads 1131 or the negative electrode leads 1132 are arranged in a row parallel to the stacking direction (X direction) of the plurality of battery cells 110. Four of the plurality of battery cells 110 may form a group, and among the four electrode leads 113 arranged in one row within the same group and connected to the same busbar 220, two electrode leads 113 may be configured as positive electrode leads 1131, and the remaining two electrode leads 113 may be configured as negative electrode leads 1132. That is, in this structure, two positive electrode leads 1131 and two negative electrode leads 1132 of four battery cells 110 are respectively connected in parallel. Specifically, the positive electrode leads 1131 of two battery cells 110 may be overlapped, and the negative electrode leads 1132 of the remaining two battery cells may also be overlapped, and these are tightly attached and welded to both sides of a single busbar 220 so as to conduct current.

The number of battery cells 110 to be included in a single group may be determined by considering the number of battery cells 110 and the capacity of the battery cell 110. In addition, the number and polarity of the electrode leads 113 connected to a single busbar 220 may vary from those exemplified herein, depending on the series and parallel connection relationships of the plurality of battery cells 110.

Each electrode lead 113 may have a width a1 smaller than the width a2 of the connected busbar 220. According to this configuration, the electrode lead 113 may be stably welded to the busbar 220 while avoiding physical contact with the busbar frame 210. Therefore, free movement of the busbar 220 within the busbar frame 210 may be ensured, thereby maintaining electrical connection between the electrode lead 113 and the busbar 220 while providing structural flexibility.

In addition, the length of the electrode lead 113 protruding from the cell case 114 may be configured to be longer than the distance between the cell case 114 of the battery cell 110 and the busbar frame 210. According to this configuration, the tension applied to the electrode lead 113 in the space between the busbar frame 210 and the cell case 114 may be minimized during cell swelling.

In addition, among the plurality of electrode leads 113 connected to the same busbar 220, the electrode leads 113 positioned at the outermost sides may be designed to have a greater length than other electrode leads 113 positioned between them. This is due to the fact that, when cell swelling occurs, the electrode lead 113 positioned at the outermost side may experience the greatest positional change due to the movement of the busbar 220, and thus is highly likely to be subject to the greatest mechanical stress and deformation.

In addition, the length of the electrode leads 113 of the plurality of battery cells 110 may be configured to increase from the center C of the plurality of battery cells 110, including the electrode leads 113 connected to the same busbar 220, toward the outermost sides.

The electrode lead 113 may be bent at least once outside the cell case 114 of the battery cell 110 to secure a sufficient length within the space between the cell case 114 and the busbar frame 210 and may be provided without interferences such as tangling or twisting with respect to adjacent leads 113. Accordingly, the bent portion of the electrode lead 113 may be at least partially straightened as the battery cell 110 expands due to cell swelling, thereby effectively minimizing the cell swelling force applied to the electrode lead 113. Therefore, the risk of the electrode lead 113 being detached from the busbar 220 or the disconnection at a joint between the electrode lead 113 and the electrode tab 112 during cell swelling may be effectively prevented.

The bent portion of the electrode lead 113 may be disposed in the space between the cell case 114 of the battery cell 110 and the busbar frame 210. This may allow the busbar 220 to move in the longitudinal direction on the busbar frame 210 without being hindered when the battery cell 110 expands due to cell swelling.

In addition, among the plurality of electrode leads 113 connected to the same busbar 220, the electrode lead 113 disposed at the outermost side may bend more than the remaining electrode leads 113, and the number of bends may gradually increase from the center C of the plurality of battery cells 110 including the electrode leads 113 connected to the same busbar 220 toward the outermost side. Therefore, the durability of the battery pack 10 may be effectively improved by increasing the extra length of the electrode leads 113 subject to the greatest displacement due to pressure deformation during cell swelling.

In addition, the electrode leads 113 connected to the same busbar 220 may be configured to be bent in a shape in which a portion protrudes toward the center C. This configuration may prevent interference or collision between the electrode leads 113 connected to the plurality of busbars 220 mounted to the busbar frame 210, which may occur when the busbars 220 move independently. That is, since the electrode leads 113 are configured to be bent toward the center C, the bent portions of the electrode leads 113 may not collide with each other when the respective busbars 220 move on the busbar frame 210.

In addition, the electrode leads 113 connected to the same busbar 220 may be disposed symmetrically with respect to the center C. This may reduce stress applied to specific portions, thereby minimizing the risk of damage or disconnection that may occur at the joint between the electrode tab 112, electrode lead 113, and busbar 220.

Referring to FIG. 5, at least some of the plurality of electrode leads 113 connected to the same busbar 220 may move in an expansion direction in which the overall width of the cell assembly 100 increases due to the expansion of the battery cell 110 caused by cell swelling. At this time, the tension generated by the partial unfolding of the bent portion of the electrode lead 113 is also transmitted to the busbar 220 connected to the relevant electrode lead 113, so that the busbar 220 moves along the longitudinal direction of the busbar frame 210, specifically, along the expansion direction.

Therefore, in the case of swelling of the battery cell 110 in which the battery cell 110 expands by the gas generated within the battery cell 110 in the cell assembly 100 due to overcharging, overheating, external impact, or the like, the mechanical stress applied to the electrode lead 113 may be effectively alleviated.

Accordingly, the battery pack 10 according to the present embodiment may prevent damage to the electrical connection between the busbar 220 and the electrode lead 113 during cell swelling, and disperse the stress applied to the electrode lead 113, thereby preventing damage or disconnection of the weld or electrical connection between the electrode tab 112 and the electrode lead 113.

Hereinafter, the specific assembly structure of the busbar assembly 200 according to various embodiments of the present disclosure will be described in detail.

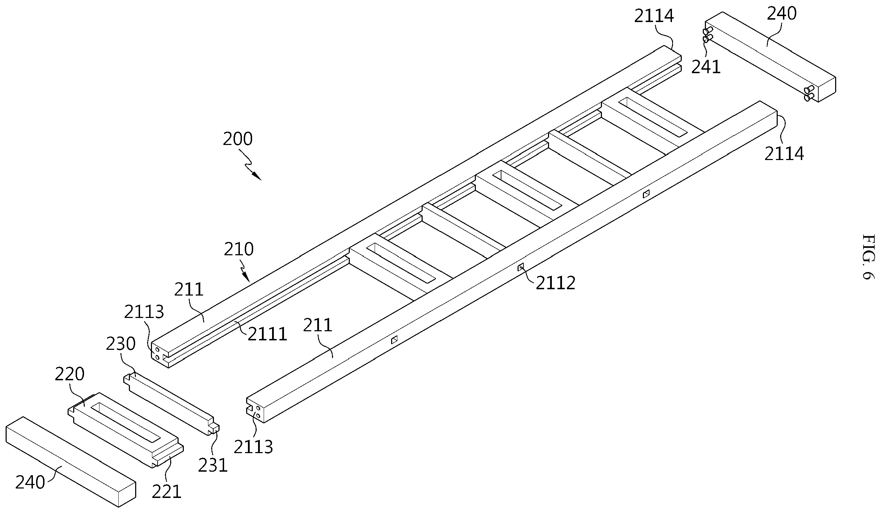

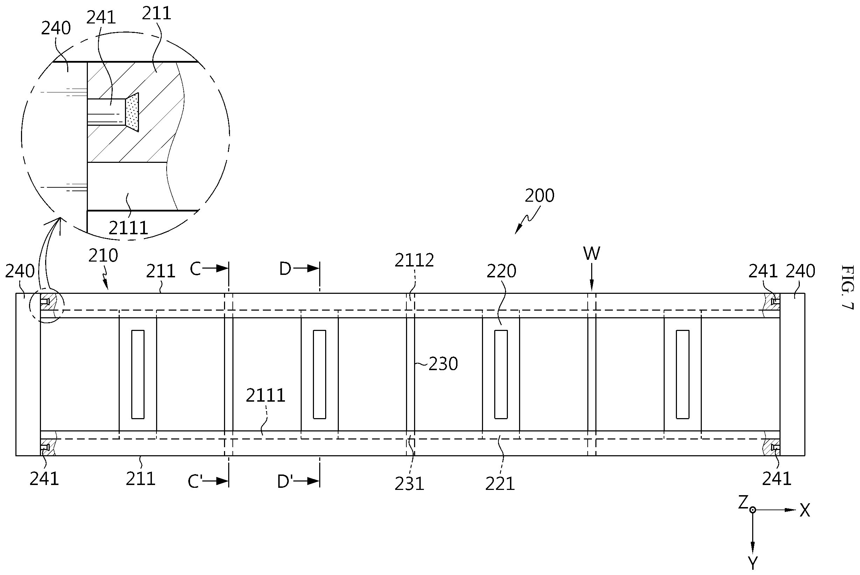

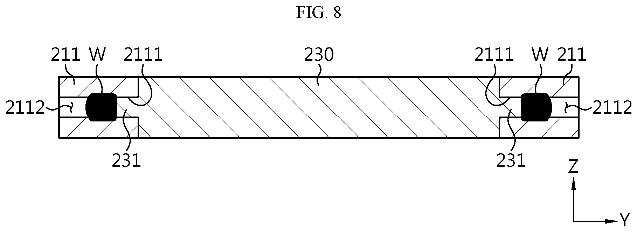

FIG. 6 is an exploded perspective view schematically illustrating a busbar assembly 200 of the battery pack 10 according to FIG. 1, FIG. 7 is a drawing illustrating the assembly structure of the busbar assembly 200 according to FIG. 6, and FIG. 8 is a schematic cross-sectional view of the busbar assembly 200 taken along line C-C' in FIG. 7.

Referring to FIGS. 6 to 8, a busbar assembly 200 of a battery pack 10 according to an embodiment of the present disclosure may include at least one partition 230.

A plurality of busbars 220 may be provided and spaced apart from each other by a predetermined distance along the longitudinal direction of the busbar frame 210. In this case, one or more partitions 230 may be formed between the busbars 220 and may be spaced predetermined distances apart from adjacent busbars 220.

Therefore, the partitions 230 serve to restrict the movement range of each busbar 220 within the busbar frame 210. As a result, the movement space may be divided depending on the number of busbars 220, thereby ensuring independent movement of the busbars 220 without interfering with each other.

Accordingly, the battery pack 10 according to the present embodiment may effectively suppress physical damage or disconnection that may occur at the weld or electrical connection between the electrode tab 112 and the electrode lead 113 by preventing excessive movement of the busbar 220. Thus, the stability of the electrical connection of the battery pack 10 may be maintained, while improving the long-term reliability and durability of the battery system.

The partition 230 may be directly mounted to the busbar frame 210.

Specifically, the busbar frame 210 may include a first longitudinal end 2113 and a second longitudinal end 2114 provided at both ends of the busbar frame 210 in the longitudinal direction, and a groove 2111 formed on one surface of the busbar frame 210.

The groove 2111 of the busbar frame 210 may be formed continuously along the longitudinal direction of the busbar frame 210 from the first longitudinal end 2113 to the second longitudinal end 2114 to be recessed to a predetermined depth from one surface of the busbar frame 210.

The partition 230 may include a connecting portion 231 configured to be inserted into the groove 2111 of the busbar frame 210 and slidable along the longitudinal direction of the busbar frame 210.

As a result, the partition 230 provides the structural advantage of being able to be mounted to the busbar frame 210 without a separate connecting member or additional fixing means. In addition, since the partition 230 is designed to slide on the busbar frame 210, simple and efficient movement and placement are possible without a complex movement mechanism.

The busbar frame 210 may be configured as a pair of guide frames 211, as described above, and the connecting portion 231 of the partition 230 may be configured to protrude a predetermined length from one surface of the partition 230 and the other surface provided on the opposite side and be inserted into the groove at both sides.

Specifically, the partition 230 may be designed to minimize structural interference with the busbar frame 210. The partition 230 may be designed to have a length capable of maintaining an appropriate ratio with respect to the length of the busbar frame 210 so as to be inserted into the groove 2111 of the busbar frame 210 in a sliding manner. In addition, the shape of the connecting portion 231 of the partition 230 may be designed to correspond to the shape of the groove 2111 of the busbar frame 210. In addition, the thickness of the partition 230 is configured to ensure smooth sliding of the busbar 220 within the movement space of the busbar frame 210, and to prevent the movement of the busbar 220 from being restricted due to excessive thickness.

In this case, the heights of the partition 230 and the busbar frame 210 in the Z-axis direction may be the same or different, and are not limited to the exemplary shapes shown in the drawings.

The busbar frame 210 may have at least one fixing portion 2112 having a through-hole of a predetermined size.

The fixing portion 2112 may serve to fix the position of the partition 230 to the busbar frame 210, thereby maximizing structural stability. For example, the connecting portion 231 of the partition 230 may be firmly fixed to the groove 2111 in the busbar frame 210 by welding W or bolting through the fixing portion 2112. As a result, the position of the partition 230 may be precisely controlled in the busbar frame 210 even when the busbar 220 moves due to swelling of the battery cell 110 or when external impact is applied.

Although a structure in which the connecting portion 231 of the partition 230 is inserted into the groove 2111 of the busbar frame 210 has been described by way of example in this specification and drawings, the present disclosure is not limited thereto. For example, an alternative structure is also possible in which a protrusion is formed in the busbar frame 210 itself and this protrusion is inserted into the groove formed in the partition 230. Such a modified structure may be implemented in various ways depending on the design purpose, and the connection between the partition 230 and the busbar frame 210 may be freely changed according to technical requirements and manufacturing process efficiency.

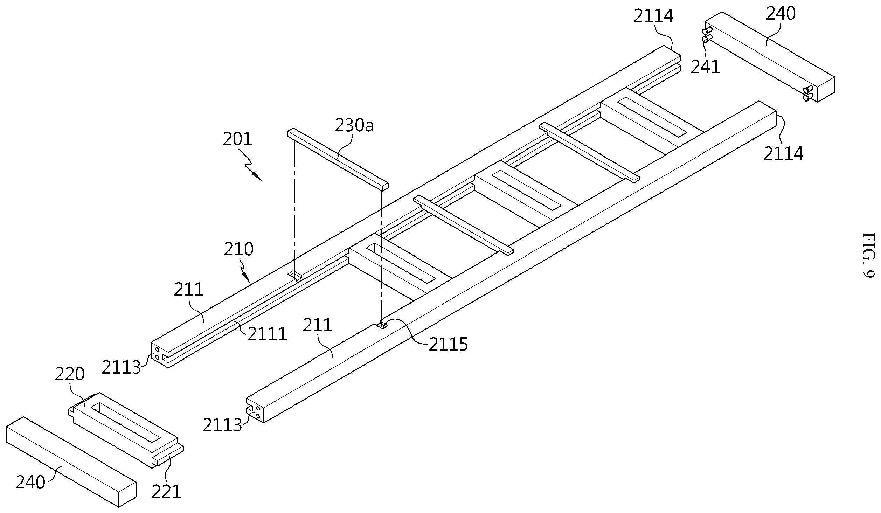

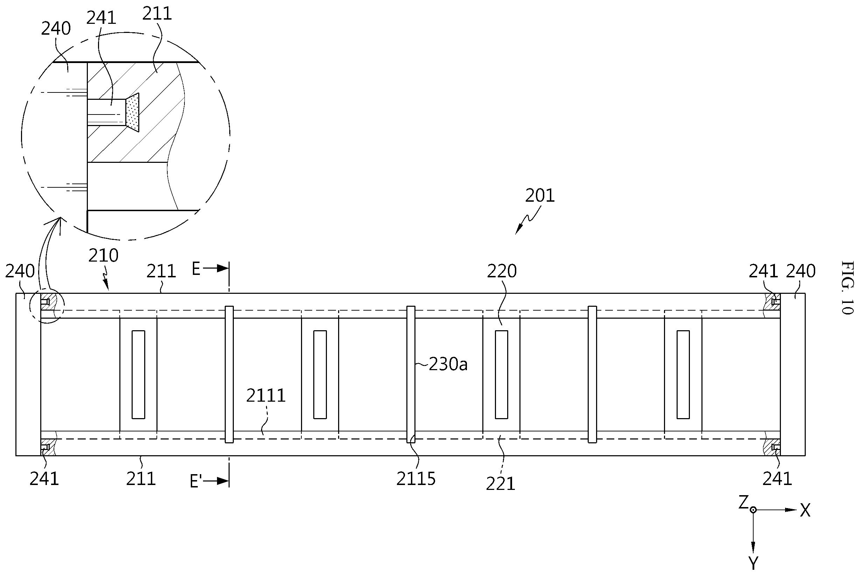

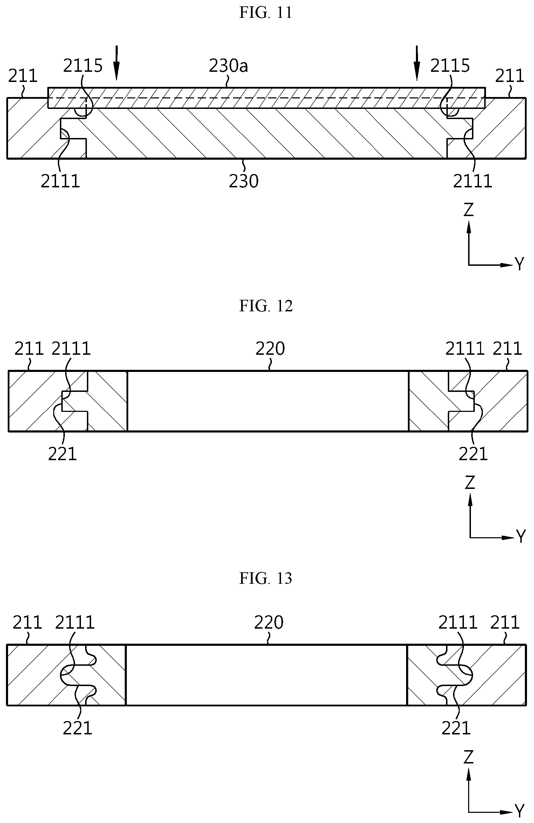

FIG. 9 is an exploded perspective view schematically illustrating a busbar assembly 201 according to another embodiment of FIG. 6, FIG. 10 is a drawing illustrating the assembly structure of the busbar assembly 201 according to FIG. 9, and FIG. 11 is a cross-sectional view schematically illustrating the busbar assembly 201 taken along line E-E' in FIG. 10.

Referring to FIGS. 9 to 11, a busbar assembly 201 of a battery pack 10 according to an embodiment of the present disclosure may include at least one partition 230a. Here, configurations common to the partition 230 and the partition 230a, as described with reference to FIGS. 6 to 8, may also be applied to the partition 230a, and a redundant description thereof will be omitted.

This partition 230a may be configured as a simple bar and may be directly mounted to the busbar frame 210, enabling simple and efficient assembly.

The busbar frame 210 may have one or more recesses 2115 to be recessed from one surface to a predetermined depth, and the partition 230a may be inserted into the recesses 2115 to be fixed.

The partition 230a may be directly inserted into the recesses 2115 of the busbar frame 210 from the outside, thereby improving installation flexibility and work efficiency. For example, the partition 230a may be inserted from top to bottom into the recesses 2115 formed to a predetermined depth on the upper surface of the busbar frame 210, enabling immediate installation without complex assembly procedures or interference between components. This structure eliminates the need for positioning the partition 230a relative to other components on the frame and allows workers to easily insert it from the outside, thereby simplifying the assembly process and reducing labor costs.

In addition, since the direct insertion structure from the outside allows various reinforcement methods, such as welding W or bolting, it may ensure a secure fixing state after installation and improve assembly efficiency.

FIG. 12 is a cross-sectional view schematically illustrating the busbar assembly 200 taken along line D-D' in FIG. 7, and FIG. 13 is a cross-sectional view schematically illustrating another embodiment of the busbar assembly 200 according to FIG. 12.

Referring to FIGS. 12 and 13, as well as FIGS. 6 and 7 discussed previously, the busbar frame 210 may include the groove 2111 as described above.

The busbar 220 may include a connecting portion 221 configured to be inserted into the groove 2111 of the busbar frame 210 and slidable along the longitudinal direction of the busbar frame 210.

Accordingly, the busbar 220 provides the structural advantage of being able to be mounted to the busbar frame 210 without a separate connecting member or additional fixing means. In addition, since the busbar 220 is designed to move on the busbar frame 210 in a sliding manner, simple and efficient movement and placement are possible without a complex movement mechanism.

The busbar frame 210 may be configured as a pair of guide frames 211, as described above, and the connecting portion 221 of the busbar 220 may be configured to protrude a predetermined length from one surface of the busbar 220 and the other surface provided on the opposite side and be inserted into the groove at both sides.

Specifically, the busbar 220 may be designed to minimize structural interference with the busbar frame 210. The busbar 220 may be designed to have a length capable of maintaining an appropriate ratio with respect to the length of the busbar frame 210 so as to be inserted into the groove 2111 of the busbar frame 210 in a sliding manner. In addition, the shape of the connecting portion 221 of the busbar 220 may be designed to correspond to the shape of the groove 2111 of the busbar frame 210.

In this case, the heights of the busbar 220 and the busbar frame 210 in the Z-axis direction may be the same or different, and are not limited to the exemplary shapes shown in the drawings.

The shapes of the connecting portion 221 of the busbar 220 and the groove 2111 of the busbar frame 210 may be variously designed and are not limited to the exemplary shapes presented in the present disclosure. Specifically, the connecting portion 221 of the busbar 220 may have various geometric shapes, and the groove 2111 of the busbar frame 210 may also be modified to have various depths, widths, and shapes capable of maintaining interlocking with the connecting portion 221 of the busbar 220. For example, as illustrated in FIG. 12, the connecting portion 221 of the busbar 220 and the groove 2111 of the busbar frame 210 may be designed in the shape of a square. In addition, as illustrated in FIG. 13, the connecting portion 221 of the busbar 220 and the groove 2111 of the busbar frame 210 may be designed in a curved shape. This may be modified depending on the structural requirements of the battery pack 10 or the optimization of the manufacturing process.

As an example, at least one of the connecting portion 221 of the busbar 220 and the groove 2111 of the busbar frame 210 may be configured as a curved surface. Such a curved surface may facilitate insertion and removal of the joint, thereby simplifying the assembly process and enhancing operator convenience. In addition, the curved surface promotes natural positional alignment during insertion, thereby reducing component positional errors during manual assembly.

This degree of design freedom may enable optimized forms according to system requirements, and various modifications are possible in consideration of structural stability, electrical performance, manufacturing efficiency, and other factors.

Similarly, although the present specification and drawings illustrate a structure in which the connecting portion 231 of the partition 230 is inserted into the groove 2111 of the busbar frame 210, the present disclosure is not limited thereto.

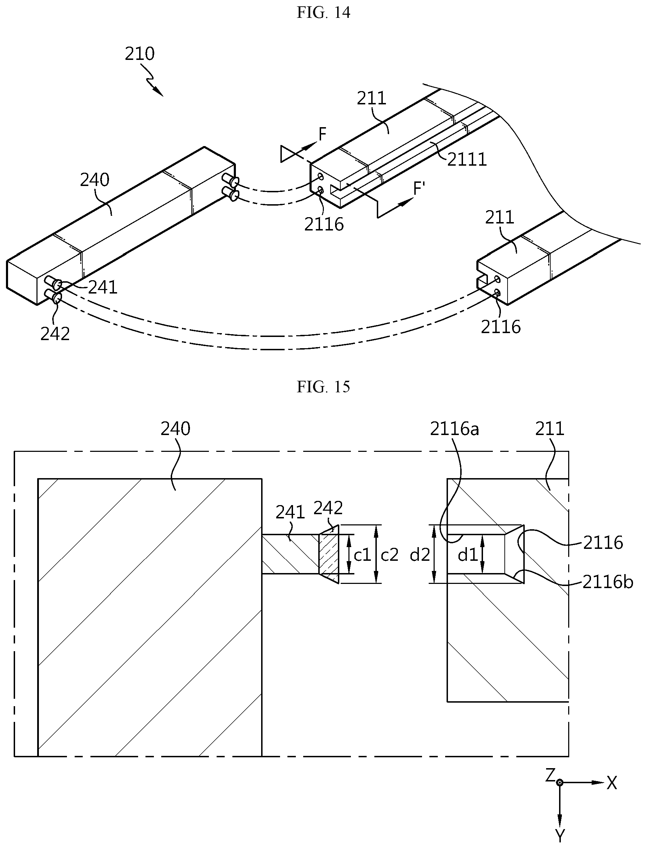

FIG. 14 is a drawing illustrating the assembly structure of a finishing portion 240 of the busbar assembly 200 according to FIG. 6, and FIG. 15 is a cross-sectional view schematically illustrating the finishing portion 240 of the busbar assembly 200 taken along line F-F' in FIG. 14.

Referring to FIGS. 14 and 15, as well as the description of FIG. 7, a busbar assembly 200 according to the present embodiment may include a finishing portion 240.

The finishing portion 240 may be configured to be in surface contact with at least one of the first longitudinal end 2113 and the second longitudinal end 2114 of the busbar frame 210.

The finishing portion 240 may be designed to be coupled to one or more ends of the busbar frame 210, thereby contributing to maintaining a constant movement space for one or more busbars 220 provided in the busbar frame 210. As a result, even if external impact or vibration occurs, overall structural deformation of the busbar frame 210 may be minimized by fixing at least one of the first longitudinal end 2113 and the second longitudinal end 2114 of the busbar frame 210.

In particular, as described above, the busbar frame 210 may be configured with a pair of guide frames 211 disposed in parallel so as to be spaced apart from each other by a predetermined distance. In this case, the predetermined distance may be maintained by the finishing portions 240, thereby further strengthening the structural stability of the busbar frame 210.

The finishing portion 240 may be configured in a bar shape or a "U" shape, and this design may enhance structural stability and maximize functional efficiency. The finishing portion 240 may include at least one protrusion 241 protruding from one surface, and an elastic portion 242 connected to an end of the protrusion 241.

The protrusion 241 of the finishing portion 240 may be configured to be forcibly fitted into an insertion portion 2116 formed on at least one of the first longitudinal end 2113 and the second longitudinal end 2114 of the busbar frame 210, thereby ensuring a stable and firm connection. For example, two protrusions 241 may be formed on each of opposite side edges of one surface of the finishing portion 240, and two insertion portions 2116 may be provided on at least one of the first longitudinal end 2113 and the second longitudinal end 2114 of the busbar frame 210, so that they may be fitted to each other. This configuration may strengthen the connection between the longitudinal ends 2113 and 2114 and the finishing portion 240 of the busbar frame 210, thereby maintaining stability despite external forces or vibrations.

The elastic portion 242 of the finishing portion 240 may have a cross-sectional area larger than the cross-sectional area of the protrusion 241 of the finishing portion 240.

That is, the elastic portion 242 of the finishing portion 240 may be made of an elastic material so that its shape is deformed by an external force, so it may be stably fitted into the insertion portion 2116 without a separate fixing member. For example, the elastic portion 242 of the finishing portion 240 may have a width c2 greater than the width c1 of the protrusion 241 of the finishing portion 240. In addition, the width d1 of the first end 2116a of the insertion portion 2116 may be configured to be equal to the width c1 of the protrusion 241 of the finishing portion 240, and the width d2 of the second end 2116b of the insertion portion 2116 may be configured to be equal to the width c2 of the elastic portion 242 of the finishing portion 240. Accordingly, since the shapes of the protrusions and concave portions correspond to each other, the busbar frame 210 and the finishing portion 240 may be firmly fixed while reducing the number of parts such as separate fastening members, thereby reducing the overall weight.

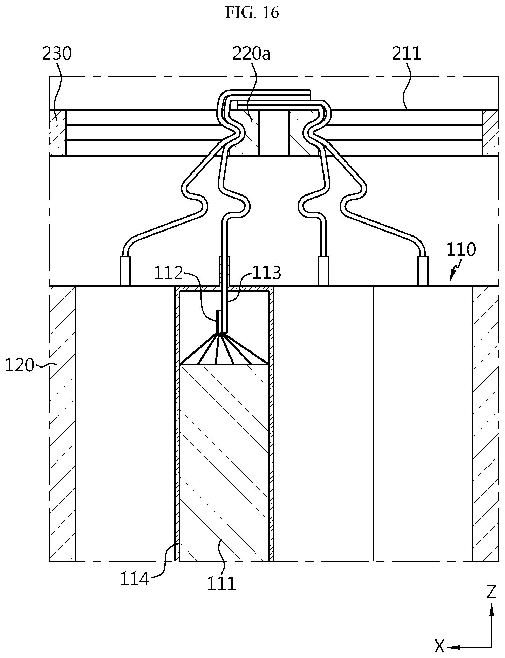

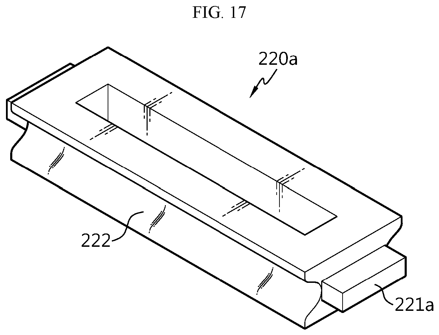

FIG. 16 is a cross-sectional view schematically illustrating another example of a battery pack 10 taken along line B-B' in FIG. 1, and FIG. 17 is a perspective view schematically illustrating the busbar 220a according to FIG. 16.

Referring to FIGS. 16 and 17, the busbar 220a may be disposed along the longitudinal direction of the busbar frame 210, particularly, the guide frame 211, and may have a curved portion 222 configured to be concave on at least a portion of a side surface that is not connected to the busbar frame 210 or 211. Here, configurations common to the busbar 220 and the busbar 220a, as described with reference to FIGS. 1 to 13, may also be applied to the busbar 220a, and a redundant description thereof will be omitted.

The busbar 220a may have a connecting portion 221a configured to be inserted into the groove 2111 of the busbar frame 210 and slidable along the longitudinal direction of the busbar frame 210. Accordingly, this provides the structural advantage of being able to be mounted to the busbar frame 210 without a separate connecting member or additional fixing means. In addition, since the connecting portion 221a is designed to move on the busbar frame 210 in a sliding manner, simple and efficient movement and placement are possible without a complex movement mechanism.

A curved portion 222 may be formed on the side surface of the busbar 220a between the connecting portions 221. The electrode lead 113 may be configured to naturally bend along the concave shape formed in the curved portion 222 of the busbar 220a. This concave shape may be precisely formed using a busbar pressing device or forming equipment during the manufacturing process. That is, the electrode lead 113 may be gently bent inwardly toward the busbar 220a along the concave shape of the curved portion 222, thereby facilitating electrical connection between the electrode lead 113 and the busbar 220a, and securing sufficient space to accommodate the deformation due to swelling of the battery cell 110 or external impact.

Accordingly, even if the bent portion of the electrode lead 113 is not necessarily formed between the cell case 114 and the busbar frame 210, the electrode lead 113 may secure the extra length of the electrode lead without interfering with the movement path of the busbar 220a on the busbar frame 210.

Therefore, the battery pack 10 according to the present embodiment may flexibly respond to the deformation due to cell swelling or external impact while effectively utilizing the space for the electrode leads 113 in the busbar assembly 200.

Referring back to FIGS. 1 and 2, the cell assembly 100 may be a bidirectional lead-out battery cell in which an electrode lead 113 of the first polarity and an electrode lead 113 of the second polarity extend outward in opposite directions. The first polarity electrode lead may be a positive electrode lead 1131, and the second polarity electrode lead may be a negative electrode lead 1132, or vice versa.

Alternatively, the cell assembly 100 may be a unidirectional lead-out battery cell in which the first polarity electrode lead 113 and the second polarity electrode lead 113 provided for each battery cell 110 extend in the same direction. Similarly, the first polarity electrode lead may be a positive electrode lead 1131, and the second polarity electrode lead may be a negative electrode lead 1132, or vice versa. That is, in this case, the cell assembly 100 may be configured such that the side of each battery cell 110 is placed on the ground so that a pair of electrode leads 113 extends along a direction (Z direction) perpendicular to the ground.

As an example, the cell assembly 100 may further include at least one buffer portion 120 between the plurality of battery cells 110 arranged in a row.

The buffer portion 120 may be interposed between adjacent battery cells 110, and may be disposed between groups of battery cells 110 connected to the same busbar 220 in order to minimize an increase in the thickness of the cell assembly 100.

In addition, the buffer portion 120 may be formed of an elastic material capable of absorbing swelling when cell swelling occurs and the battery cell 110 expands along the stacking direction (X direction) of the battery cells 110. For example, the buffer portion 120 may include at least one of EPP (expanded polypropylene) and urethane. Therefore, the buffer portion 120 may stably absorb volume expansion due to swelling of the battery cells 110.

The busbar frame 210 may be disposed on at least one side of the cell assembly 100. For example, in the case where a pair of electrode leads 113 extends in opposite directions, the busbar frame 210 may be disposed on both sides of the cell assembly 100, i.e., on the lateral sides of the cell assembly 100.

In addition, in the case where a pair of electrode leads 113 extends in the same direction, the busbar frame 210 may be disposed on one side of the cell assembly 100, i.e., on the upper side of the cell assembly 100.

In addition, the battery pack 10 of the present disclosure may include a pack case 500.

The pack case 500 may accommodate a cell assembly 100 including a plurality of battery cells 110 arranged in at least one row within an internal accommodation space, eliminating an intermediate module step. That is, the cell assembly 100 may be positioned inside the pack case 500.

Accordingly, the present disclosure may implement a battery pack 10 as the so-called CTP (Cell-to-Pack) structure.

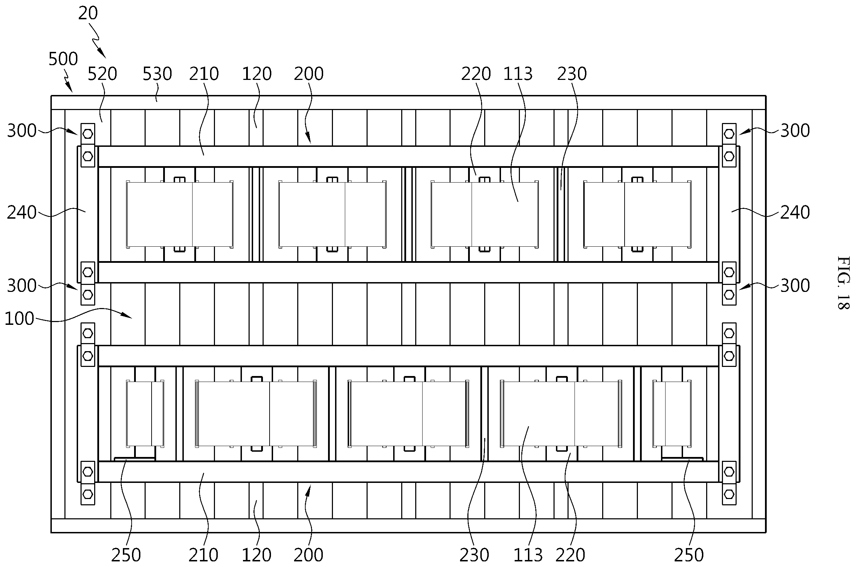

Hereinafter, the structure of battery packs 20, 30, and 40 according to various embodiments of the present disclosure will be described with reference to FIGS. 18 to 22.

Here, configurations common to the battery pack 10 and the battery packs 20, 30, and 40, as described with reference to FIGS. 1 to 17, may also be applied to the battery packs 20, 30, and 40, and a redundant description thereof will be omitted.

The battery packs 10, 20, 30, and 40 according to an embodiment of the present disclosure may further include various other battery pack components known at the time of filing of the present disclosure. For example, the battery packs 10, 20, 30, and 40 according to an embodiment of the present disclosure may further include components such as a current sensor, a fuse, and a service plug. In addition, the battery packs 10, 20, 30, and 40 may include a terminal-connecting portion 250 extending upward from two of the plurality of busbars 220 or 220a. The terminal-connecting portion 250 may have a bolt-type external input/output terminal (not shown) to ensure stable power input/output.

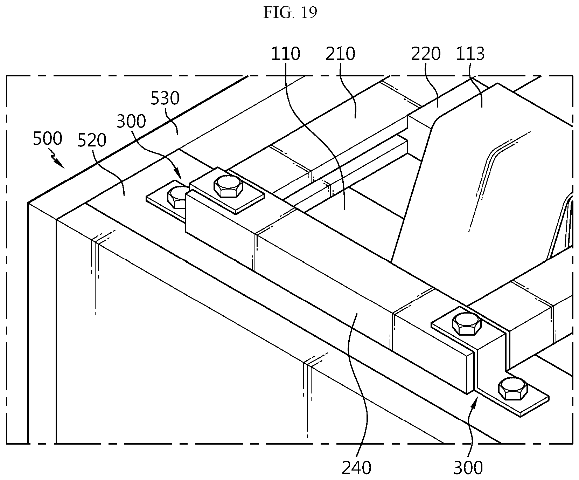

FIG. 18 is a schematic drawing of a battery pack 20 according to another embodiment of the present disclosure, and FIG. 19 is a schematic drawing of a bracket 300 secured to a pack case 500 of the battery pack 20 according to FIG. 18.

Referring to FIGS. 18 and 19, as well as the description of FIG. 1 above, the battery pack 10 or 20 may include a pack case 500 that forms the exterior of the battery pack 10 or 20 and has an accommodation space formed therein. This configuration is also applied to the battery packs 30 and 40 according to other embodiments, which will be discussed later, and will be described herein.

Specifically, the pack case 500 may include a base plate 510, a side plate 520, an end plate 530, and a cover plate (not shown).

The base plate 510 may form the lower surface of the pack case 500. That is, the base plate 510 may be disposed at the lowest position. The side plate 520 and the end plate 530 may be disposed to cover the left/right and front/rear sides of the cell assembly 100, respectively, along the perimeter of the base plate 510. The lower ends of the side plate 520 and the end plate 530 may be connected to the base plate 510. In addition, the cover plate may be configured to cover the upper portion of the side plate 520 and the end plate 530.

Referring to FIGS. 18 and 19, in the battery pack 20 according to the present embodiment, a busbar frame 210 may be secured to the pack case 500, for example, the side plate 520. As a result, the busbar frame 210 may be fixed, allowing only the busbars 220 or 220a to move independently according to cell swelling.

As an example, both longitudinal ends of the busbar frame 210 may be secured to the side plate 520.

To reinforce this securing, one or more brackets 300 may be installed at both longitudinal ends of the busbar frame 210. Here, the bracket 300 may be a member having bent portions. In addition, although the bracket 300 is illustrated as being fixed by bolting, it is not limited thereto and may have various securing structures.

Accordingly, it is possible to further strengthen the fixing strength of the side plate 520 and the busbar frame 210, ensure the stability of the overall structure, and significantly improve resistance to external impact or vibrations.

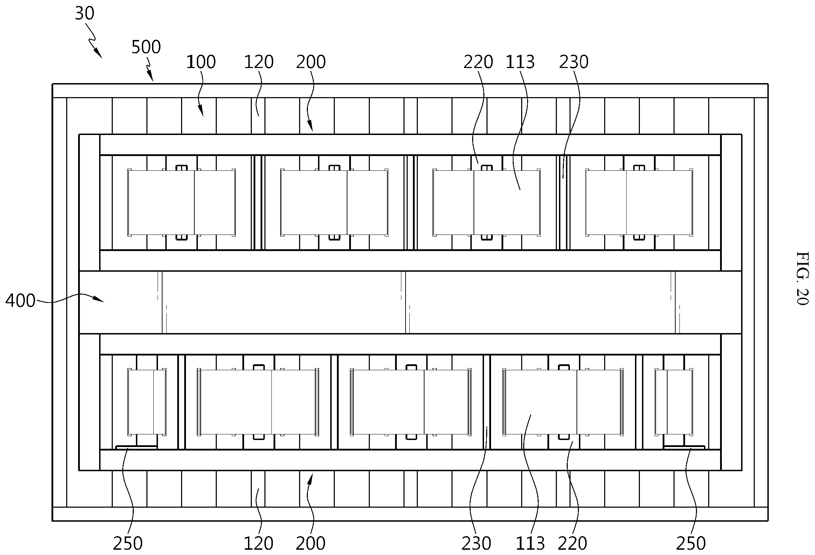

FIG. 20 is a schematic drawing of a battery pack 30 according to another embodiment of the present disclosure.

Referring to FIG. 20, the battery pack 30 according to the present embodiment may include a frame support plate 400 disposed between a pair of busbar frames 210.

The frame support plate 400 may be formed in a plate shape and configured to secure the respective busbar frames 210 from the side, thereby supporting the entire structure. This may enhance the stability of the busbar frame 210 and ensure that the electrical connections and mechanical components within the battery pack 30 are firmly maintained. In addition, the frame support plate 400 serves as a support for stably mounting various electrical components, such as a battery management system (BMS), cooling system, and sensors, thereon, thereby maximizing space utilization within the battery pack 30 while providing a high-strength structure. In particular, since the electrical components are secured by the frame support plate 400, damage caused by vibration or external impact may be prevented, and accessibility may be improved during maintenance or component replacement.

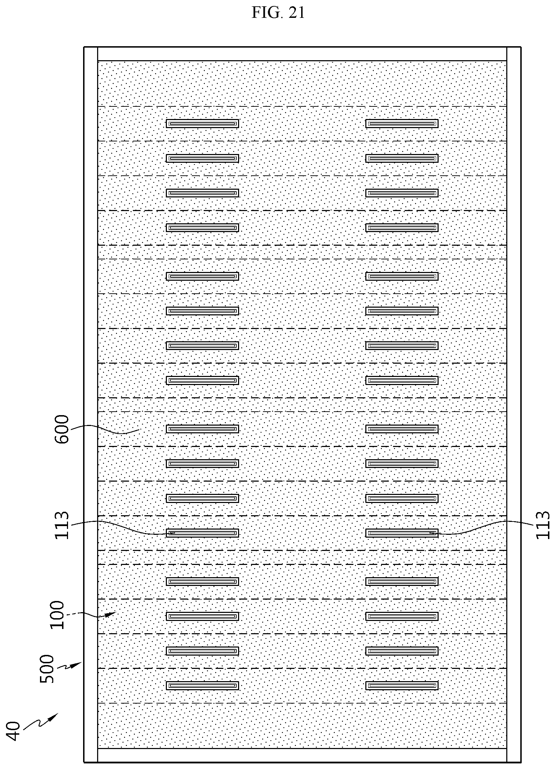

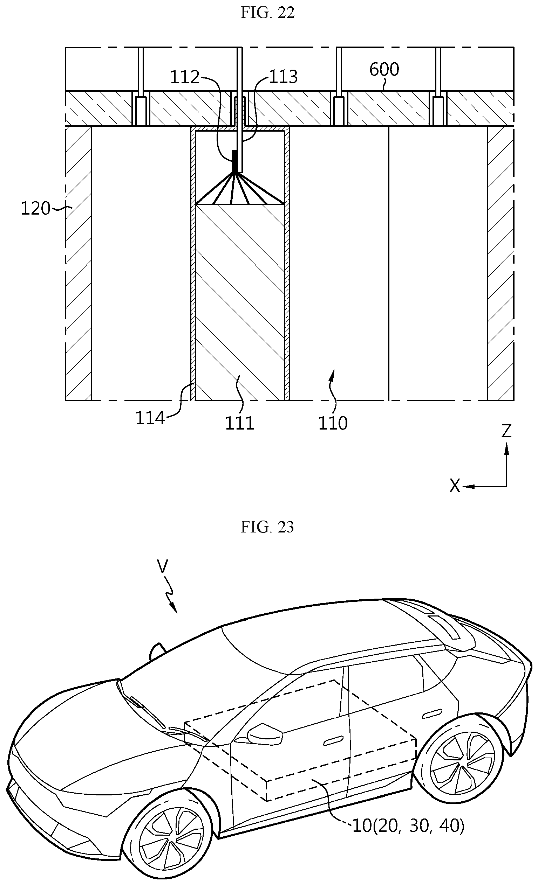

FIG. 21 is a schematic drawing of a battery pack 40 according to another embodiment of the present disclosure, and FIG. 22 is a drawing illustrating a protective pad 600 of the battery pack 40 according to FIG. 21.

Referring to FIGS. 21 and 22, a battery pack 40 according to the present embodiment may include a protective pad 600.

The protective pad 600 may be disposed between the cell assembly 100 and the busbar assembly 200 or 201 to prevent physical collisions between the battery cells 110 and the busbars 220 or 220a due to the movement of the busbars 220 or 220a when the battery cells 110 experience swelling. This may reduce direct contact or friction between the battery cells 110 and the busbars 220 or 220a, and prevent damage to electrical connecting portions or structural components. Accordingly, the durability and stability of the battery pack 40 may be further enhanced.

However, the protective pad 600 may be designed to have an appropriate thickness so as not to impede the movement of the busbars 220 or 220a and, in particular, to ensure mobility even when it is disposed around the electrode leads 113. Thus, the protective pad 600 may prevent physical collisions due to cell swelling, while allowing free movement of the busbars 220 or 220a and electrode leads 113, thereby maintaining the electrical connection of the battery pack 40 and enabling stable operation without performance degradation.

FIG. 23 is a drawing schematically illustrating a vehicle V including the battery pack 10, 20, 30, or 40 of the aforementioned embodiments.

Referring to FIG. 23, a vehicle V according to an embodiment of the present disclosure may include one or more battery packs 10, 20, 30, or 40 according to the present disclosure. The vehicle V according to an embodiment of the present disclosure may further include various other components included in the vehicle, in addition to the battery pack 10, 20, 30, or 40. For example, the vehicle V according to an embodiment of the present disclosure may further include, in addition to the battery pack 10, 20, 30, or 40 according to an embodiment of the present disclosure, a car body, a motor, and a control device such as an electronic control unit (ECU).

In addition, the battery pack 10, 20, 30, or 40 according to an embodiment of the present disclosure may be applied to various types of energy storage devices or power sources, and may also be applied to other devices, apparatuses, and facilities, such as energy storage systems, using a secondary battery, in addition to the vehicle V.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

10, 20, 30, 40: Battery pack
100: Cell assembly
110: Battery cell
111: Electrode assembly
112: Electrode tab
1121: Positive electrode tab
1122: Negative electrode tab
113: Electrode lead
1131: Positive electrode lead
1132: Negative electrode lead
114: Cell case
120: Buffer portion
200, 201: Busbar assembly
210: Busbar frame
211: Guide frame
2111: Groove
2112: Fixing portion
2113: First longitudinal end
2114: Second longitudinal end
2115: Recess
2116: Insertion portion
2116a: First end
2116b: Second end
220, 220a: Busbar
221, 221a: Connecting portion
222: Curved portion
230, 230a: Partition
231: Connecting portion
240: Finishing portion
241: Protrusion
242: Elastic portion
250: Terminal-connecting portion
300: Bracket
400: Frame support plate
500: Pack case
510: Base plate
520: Side plate
530: End plate
600: Protective pad
V: Vehicle
W: Welding

## Claims

1. A battery pack comprising:
a cell assembly comprising a plurality of battery cells arranged at least in a row; and
a busbar assembly electrically connected to the cell assembly,
wherein the busbar assembly comprises:
a busbar frame having a predetermined length and provided along an arrangement direction of the plurality of battery cells; and
at least one busbar connected to the electrode leads of the plurality of battery cells and mounted to the busbar frame so as to be independently movable along a longitudinal direction of the busbar frame.

2. The battery pack of claim 1,
wherein the busbar frame
is configured as a pair of guide frames arranged in parallel to be spaced apart from each other by a predetermined distance, and
wherein the at least one busbar is configured to slide between the pair of guide frames along the longitudinal direction of the busbar frame.

3. The battery pack of claim 1,
wherein the electrode lead
has a width smaller than that of the busbar and is welded to the busbar so as not to contact the busbar frame.

4. The battery pack of claim 1,
wherein lengths of electrode leads disposed at the outermost sides, among a plurality of electrode leads connected together to the busbar, are longer than a length of an electrode lead disposed between them.

5. The battery pack of claim 1,
wherein the electrode lead
is bent at least once, and
wherein at least some of a plurality of electrode leads connected together to the busbar are configured such that a bent portion of the electrode lead is partially straightened by movement of the busbar due to swelling of the battery cell.

6. The battery pack of claim 5,
wherein the bent portion of the electrode lead
is located in a space between a cell case of the battery cell and the busbar.

7. The battery pack of claim 5,
wherein the plurality of electrode leads connected together to the busbar are bent toward a center of the plurality of electrode leads.

8. The battery pack of claim 1,
wherein a plurality of busbars
are provided to be spaced apart from each other by a predetermined distance along the longitudinal direction of the busbar frame, and
wherein the busbar assembly
comprises at least one partition provided between adjacent busbars so as to be spaced apart from the respective busbars by predetermined distances.

9. The battery pack of claim 8,
wherein the busbar frame comprises:
a first longitudinal end and a second longitudinal end provided at both ends of the busbar frame in the longitudinal direction; and
a groove formed to be recessed to a predetermined depth from one surface of the busbar frame and extending from the first longitudinal end to the second longitudinal end along the longitudinal direction of the busbar frame, and
wherein the partition
has a connecting portion inserted into the groove to be slidable along the longitudinal direction of the busbar frame.

10. The battery pack of claim 8,
wherein the busbar frame
comprises at least one fixing portion having a through-hole of a predetermined size, and wherein the partition
is fixed to the busbar frame through the fixing portion.

11. The battery pack of claim 8,
wherein the busbar frame
comprises at least one recess formed to be recessed to a predetermined depth from one surface of the busbar frame, and
wherein the partition
is configured to be inserted into the recess and fixed in position.

12. The battery pack of claim 1,
wherein the busbar frame comprises:
a first longitudinal end and a second longitudinal end provided at both ends of the busbar frame in the longitudinal direction; and
a groove formed to be recessed to a predetermined depth from one surface of the busbar frame and extending from the first longitudinal end to the second longitudinal end along the longitudinal direction of the busbar frame, and
wherein the busbar
comprises a connecting portion inserted into the groove to be slidable along the longitudinal direction of the busbar frame.

13. The battery pack of claim 12,
wherein the busbar assembly
is configured such that at least one of the connecting portion of the busbar and the groove of the busbar frame is formed as a curved surface.

14. The battery pack of claim 12,
wherein the busbar assembly
comprises a finishing portion configured to be in surface contact with at least one of the first longitudinal end and the second longitudinal end.

15. The battery pack of claim 14,
wherein the finishing portion comprises:
at least one protrusion protruding from one surface of the finishing portion; and
an elastic portion connected to an end of the protrusion and made of an elastic material having a cross-sectional area larger than that of the protrusion, and
wherein the protrusion and the elastic portion
are fitted into an insertion portion formed on one of the first longitudinal end and the second longitudinal end.

16. The battery pack of claim 5,
wherein the busbar
is disposed along the longitudinal direction of the busbar frame and has a concave shape on at least a portion of a side surface of the busbar that is not connected to the busbar frame, and
wherein the electrode lead
is bent along the concave shape.

17. The battery pack of claim 1,
wherein the cell assembly
comprises at least one buffer portion provided between the plurality of battery cells.

18. A vehicle comprising at least one battery pack according to any one of claims 1 to 17.
